# EUROPÄISCHE PATENTANMELDUNG

(11) **EP 0 878 901 A2**
(43) Veröffentlichungstag der Anmeldung: **18.11.1998**
(21) Anmeldenummer: 98890101.3
(22) Anmeldetag: 07.04.1998
(51) Int. Cl.: H02P 1/44

(54) **Verfahren und Schaltung zum Steuern des Anlaufens eines einphasigen Asynchronmotors**

(30) Priorität: 13.05.1997 AT 815/97
(71) Anmelder: ATB Austria Antriebstechnik Aktiengesellschaft, 8724 Spielberg (Steiermark) (AT)
(72) Erfinder: Karner, Wolfgang, Ing., 8720 Apfelberg (AT); Reiter, Hannes, Ing., 8753 Fohnsdorf (AT); Herzl, Harald, Ing., 8740 Zeltweg (AT)
(74) Vertreter: Beer, Manfred, Dipl.-Ing.

(57) **Zusammenfassung**

Zum Begrenzen des Einschaltstromes eines an einem Einphasenwechselstromnetz betreibbaren Asynchronmotors mit einer Hauptphasenwicklung (1), einer Hilfsphasenwicklung (2) und einem Betriebskondensator (3) wird die Impedanz im Erregerkreis der Hauptphasenwicklung (1) während des Anlaufens des Motors erhöht. Hierzu ist die Hauptphasenwicklung (1) in zwei Teilwicklungen (1', 1") geteilt die beim Anlaufen in Serie und beim Betrieb des Motors parallel geschaltet sind.

Um das Anlaufmoment des Elektromotors zu verbessern, ist ein Schalter (7) vorgesehen, mit dem der Betriebskondensator (3) periodisch kurzgeschlossen werden kann. Dabei wird die Eigenschaft von Kondensatoren ausgenützt, daß durch zeitweises Kurzschließen innerhalb der Netzspannungsperiode die wirksame Impedanz des Kondensators gegenüber dem Betrieb ohne zeitweises periodisches Entladen verringert werden kann. Dies kommt in der Wirkung einer Kapazitätserhöhung des Betriebskondensators (3) gleich, was insbesondere zu Beginn des Anlaufens von Vorteil ist.

## Beschreibung

Die Erfindung betrifft ein Verfahren zum Steuern des Anlaufens eines einphasigen Asynchronmotors mit einer Hauptphasenwicklung, einer Hilfsphasenwicklung und einem zur Hilfsphasenwicklung in Serie geschalteten Betriebskondensator, bei dem die Impedanz im Erregerkreis der Hauptphasenwicklung während des Anlaufens des Motors erhöht wird.

Die Erfindung betrifft weiters eine Schaltung zum Steuern des Anlaufens eines einphasigen Asynchronmotors mit einer Hauptphasenwicklung, einer zur Hauptphasenwicklung parallel geschalteten Hilfsphasenwicklung und einem zur Hilfsphasenwicklung in Serie geschalteten Betriebskondensator, und mit einer Einrichtung, um die Impedanz im Erregerkreis der Hauptphasenwicklung während des Anlaufens des Motors zu erhöhen.

Die Hersteller elektrischer Motoren sind zunehmend angehalten, durch Motorenanläufe hervorgerufene Netzeinbrüche, verursacht durch Stromspitzen des Motors, zu begrenzen. Das gilt auch für Asynchronmotoren, die am Einphasenwechselstromnetz betrieben werden.

Es ist bekannt, bei einphasigen Asynchronmotoren, bei welchen ein Betriebskondensator in Serie zur Hilfswicklung geschaltet ist, die Kapazität des Betriebskondensators entsprechend dem Impedanzwert der in Serie liegenden Hilfswicklung zu wählen. Da sich der Impedanzwert der Motorwicklung (Hauptphasenwicklung) beim Anlaufen des Motors, d.h. vom Einschalten bis zum eigentlichen Betriebspunkt, in einem weiten Bereich (um den Faktor 5 bis 10) ändert, ist es bekannt mit Hilfe eines Fliehkraftschalters zwischen zwei Kondensatoren mit verschieden großer Kapazität umzuschalten. Der für das Anlaufen verwendete Kondensator hat eine größere Kapazität und sorgt bei optimaler Dimensionierung zu Beginn des Anlaufens dafür, daß die Ströme in der Hauptphasenwicklung und in der Hilfsphase elektrisch um 90° phasenverschoben sind und daß die von diesen Strömen verursachten magnetischen Felder etwa gleich groß sind. Der Kondensator mit der kleineren Kapazität, auf den erst nach dem Erreichen einer bestimmten Drehzahl umgeschaltet wird, bewirkt beim Betrieb des Motors das Gleiche wie der Kondensator mit der größeren Kapazität, beim Anlaufen.

Aus der DE 38 20 267 A ist eine Schaltung bekannt, mit der die Impedanz im Erregerkreis der Hauptphasenwicklung durch Vorschalten eines Widerstandes während des Anlaufens des Motors erhöht werden kann, wodurch Stromspitzen beim Anlaufen begrenzt werden. Um den damit verbundenen Drehmomentverlust zu kompensieren, kann dem Betriebskondensator ein Anlaufkondensator parallelgeschaltet werden.

Zwei Kondensatoren mit weit auseinanderliegenden Kapazitäten sind aber nachteilig, weil ein Optimieren der Drehmomentcharakteristik des Motors über die Anlaufphase nicht möglich ist. Dieser Nachteil ist besonders groß, wenn die Impedanz im Erregerkreis der Hauptphasenwicklung während des Anlaufens des Motors erhöht wird.

Der Erfindung liegt die Aufgabe zu Grunde ein Verfahren und eine Schaltung anzugeben, mit welchen die Höhe des Einschaltstromes beim Anlaufen eines einphasigen Asynchronmotors ohne Kondensatoren mit unterschiedlichen Kapazitäten begrenzt werden kann.

Gelöst wird diese Aufgabe mit dem Verfahren der Erfindung dadurch, daß der Betriebskondensator periodisch kurzgeschlossen wird.

Was die Schaltung anlangt, so wird mit ihr die genannte Aufgabe mit einer Schaltung gelöst, die erfindungsgemäß gekennzeichnet ist durch einen Schalter mit dem der Betriebskondensator periodisch kurzgeschlossen werden kann.

Die Impedanz im Erregerkreis der Hauptphasenwicklung kann dabei auf einfache Weise, wie dies aus der DE 38 20 267 A bekannt ist, z.B. dadurch erhöht werden, daß zur Hauptphasenwicklung ein zuschaltbarer Widerstand in Serie geschaltet ist. Durch diesen zur Hauptphasenwicklung zu- und wegschaltbaren Widerstand kann der Einschaltstrom begrenzt werden, wobei allerdings das Anlaufmoment des Elektromotors etwas verschlechtert wird.

Um diesen Mangel auszugleichen, ist erfindungsgemäß ein Schalter vorgesehen, mit dem der Betriebskondensator periodisch kurzgeschlossen werden kann.

Die Erfindung macht sich dabei die Eigenschaft von Kondensatoren zunutze, daß die wirksame Impedanz des Kondensators durch zeitweises Kurzschließen innerhalb der Netzspannungsperiode gegenüber dem Betrieb ohne zeitweises periodisches Entladen verringert werden kann, was in der Wirkung einer Kapazitätserhöhung des Betriebskondensators gleichkommt.

Um den Einschaltstrom zu begrenzen, kann vorgesehen sein, daß die Hauptphasenwicklung aus wenigstens zwei Teilwicklungen besteht, die beim Einschalten in Serie geschaltet sind, wogegen sie beim Betrieb des Motors parallel geschaltet sind. Bei dieser Ausführungsform wird die Gesamtimpedanz der Hauptphasenwicklung nicht durch einen zusätzlichen Vorwiderstand erhöht, sondern die einzelnen Teilwicklungen der Hauptphasenwicklung werden beim Einschalten des Motors in Serie und nach dem Anlaufen zueinander parallel geschaltet.

In einer Ausführungsform kann vorgesehen sein, daß die Hauptphasenwicklung aus wenigstens zwei parallelen Teilwicklungen besteht, von denen beim Einschalten wenigstens eine Teilwicklung weggeschaltet ist.

Nachfolgend wird die Erfindung an Hand von drei Ausführungsbeispielen der Schaltung der Erfindung mit Bezug auf die Zeichnungen näher erläutert. Es zeigt: Fig. 1 eine erste Ausführungsform einer Schaltung zum Steuern des Anlaufens eines einphasigen Asynchronmotors, Fig. 2a und 2b eine zweite Ausführungsform ein Diagramm mit der Hilfsphasenspannung und einer Vergleichsspannung, Fig. 3 eine dritte Ausführungsform und Fig. 4 eine Netzspannung.

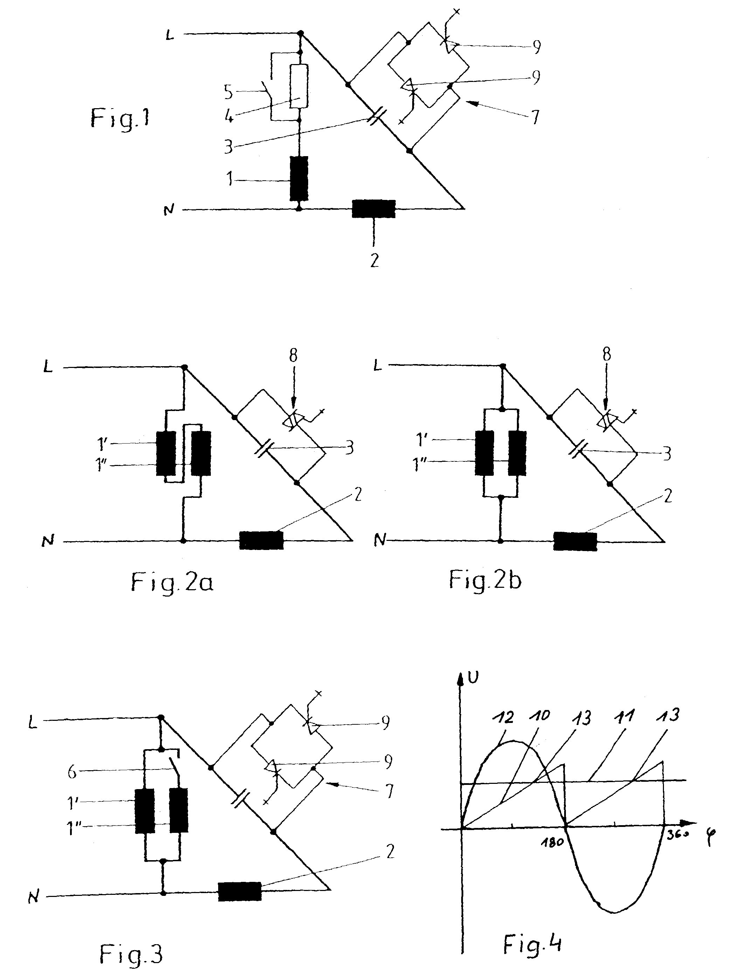

In Fig. 1 ist schematisch eine Schaltung eines an einem Einphasenwechselstromnetz betreibbaren Asynchronmotors dargestellt, bei der eine Hauptphasenwicklung 1, eine Hilfsphasenwicklung 2 und ein Betriebskondensator 3 an Netzanschlüsse L und N angeschlossen sind. Die Hilfsphasenwicklung 2 und der Betriebskondensator 3 sind zueinander in Serie und zur Hauptphasenwicklung 1 parallel geschaltet.

Bei der in Fig. 1 gezeigten Ausführungsform ist zum Begrenzen des Einschaltstroms, also beim Anlaufen des Motors ein Vorwiderstand 4 zu Hauptphasenwicklung 1 in Serie geschaltet. Der Vorwiderstand 4 kann mit Hilfe eines Schalters 5 überbrückt werden. Beim Einschalten und beim Anlaufen des Motors ist der Schalter 5 geöffnet und wird nach dem Anlaufen geschlossen, so daß beim Betrieb des Motors der Vorwiderstand 4 überbrückt ist.

Auf diese Weise kann der Strom beim Anlaufen und in der Anlaufphase auf einfache Weise begrenzt und ein Spannungseinbruch im Netz verhindert werden, ohne daß das Drehmoment des Motors während der Anlaufphase unangemessen verschlechtert wird.

In den Fig. 2a und 2b ist eine Ausführungsform einer erfindungsgemäßen Schaltung dargestellt, bei der die Hauptphasenwicklung 1 aus zwei Teilwicklungen 1', 1" besteht. Es können mehr als zwei Teilwicklungen vorgesehen sein, welche die Hauptphasenwicklung 1 bilden.

Wie in Fig. 2a dargestellt ist, sind die Teilwicklungen 1' und 1" in der Anlaufphase in Serie geschaltet, so daß die summierten Impedanzen der Teilwicklungen 1', 1" wie ein zugeschalteter Vorwiderstand wirken. Beim Betrieb des Motors sind die Teilwicklungen 1', 1" parallel geschaltet, wie dies Fig. 2b zeigt. Sind mehr als zwei Teilwicklungen 1', 1" vorgesehen, dann können diese während des Anlaufen des Motors eine nach der anderen parallel geschaltet werden, was eine gute Steuerung von Strom und Spannung in der Anlaufphase des Motors erlaubt.

In Fig. 3 ist eine dritte Ausführungsform einer erfindungsgemäßen Schaltung dargestellt, bei der die Hauptphasenwicklung 1 aus zwei Teilwicklungen 1' und 1" besteht. Auch bei dieser Ausführungsform können mehr als zwei Teilwicklungen vorgesehen sein. In der Anlaufphase ist die Teilwicklung 1" mit Hilfe eines Schalters 6 weggeschaltet, wie dies in Fig. 3 gezeigt ist.

Wenn bei dieser Ausführungsform eine Hauptphasenwicklung 1 mit mehr als zwei Teilwicklungen vorgesehen ist, können alle Teilwicklungen bis auf eine Teilwicklung in der Anlaufphase über Schalter weggeschaltet sein. Während des Anlaufens des Motors werden die Teilwicklungen eine nach der anderen zugeschaltet.

Bei allen beschriebenen Ausführungsformen ist parallel zum Betriebskondensator 3 ein Schalter 7 oder 8 vorgesehen. Der Schalter 7 der in Fig. 1 und 3 gezeigten Ausführungsformen besteht aus antiparallel geschalteten Thyristoren 9 (oder GTO's).

Der Schalter der Figuren 2a und 2b ist als Triac 8 ausgebildet.

Mit Hilfe der Schalter 7 und 8 kann der Betriebskondensator 3 periodisch, beispielsweise bei jeder Halbwelle nach dem Nulldurchgang der Kondensatorspannung, für bestimmte Zeiträume leitend überbrückt werden. So kann die effektiv wirksame Kapazität des Betriebskondensators 3 den Erfordernissen beim Anlaufen des Motors optimal angepaßt werden.

Um die Thyristoren 9 bzw. Triacs 8 zu zünden, ist eine nicht dargestellte Einrichtung vorgesehen, die eine Steuerspannung 10 und einen Steuerstrom in Sägezahnform mit der doppelten Netzfrequenz erzeugt, die zur Netzfrequenz synchron ist. Desweiteren ist eine Schaltung vorgesehen, die eine vorgegebene Vergleichsspannung 11 mit der Steuerspannung 10 vergleicht und die Schalter 7 oder 8 bei Gleichheit dieser Spannungen öffnet. In Fig. 4 ist die Netzspannung 12, die Vergleichsspannung 11, die Steuerspannung 10 sowie ein Zündpunkt 13 für den Schalter 7, 8 schematisch dargestellt.

Die Vergleichsspannung 11 kann in einfachen Fällen konstant sein, wobei die Schließwinkel ϕ für den Motoranlauf z.B. zwischen 110° und 150° liegen können. Unter dem Schließwinkel ϕ wird der elektrische Phasenwinkel zwischen dem Nulldurchgang der Netzspannung 12 und dem Öffnen der Schalter 7 oder 8 verstanden.

Wenn die Steuerung genauer erfolgen soll, kann die Drehzahl oder ein entsprechender Betriebsparameter des Motors laufend gemessen werden. Der Schließwinkel ϕ der Schalter 7 oder 8 kann dann durch entsprechende Wahl der Vergleichsspannung 11 entsprechend der jeweiligen Drehzahl bzw. dem jeweiligen Betriebsparameter des Motors vorgegeben werden. Die Vergleichsspannung 11 kann empirisch oder rechnerisch über den gesamten Anlaufvorgang ermittelt und gespeichert werden. Wenn der konstante Schließwinkel ϕ oder ein variabler Schließwinkel ϕ (eine konstante Vergleichsspannung 11 oder eine variable Vergleichsspannung 11) bestimmt wird, wird der Vorteil berücksichtigt, daß sich die Impedanz in der Hauptphasenwicklung ändert, wenn wie weiter oben beschrieben beispielsweise ein Widerstand 4 (Fig. 1), eine Teilwicklung 1" (Fig. 3) zugeschaltet bzw. zwei Teilwicklungen 1', 1" von serieller in parallele Schaltung umgeschaltet werden (Fig. 2a, 2b).

Um das Ändern der Motorimpedanz in der Hauptphasenwicklung durchzuführen und die dem Betriebskondensator 3 zugeordneten Schalter 7 und 8 zu betätigen, sind Steuerschaltungen vorgesehen, die in digitaler oder in analoger Technik ausgeführt sein können. Diese Steuerschaltungen leiten aus einem drehzahlabhängigen und einem stromabhängigen Motorsignal Signale zum Ansteuern der Änderung der Impedanz oder zum Betätigen der dem Betriebskondensator 3 zugeordneten Schalter 7 und 8 ab.

Ein Ausführungsbeispiel der Erfindung kann wie folgt beschrieben werden:

Zum Begrenzen des Einschaltstromes eines an einem Einphasenwechselstromnetz betreibbaren Asynchronmotors mit einer Hauptphasenwicklung 1, einer Hilfsphasenwicklung 2 und einem Betriebskondensator 3 wird die Impedanz im Erregerkreis der Hauptphasenwicklung 1 während des Anlaufens des Motors erhöht. Hierzu ist die Hauptphasenwicklung 1 z.B. in zwei Teilwicklungen 1', 1" geteilt, die beim Anlaufen in Serie und beim Betrieb des Motors parallel geschaltet sind.

Um das Anlaufmoment des Asynchronmotors zu verbessern, ist ein Schalter 7 vorgesehen, mit dem der Betriebskondensator 3 periodisch kurzgeschlossen werden kann. Dabei wird die Eigenschaft von Kondensatoren ausgenützt, daß durch zeitweises Kurzschließen innerhalb der Netzspannungsperiode die wirksame Impedanz des Kondensators gegenüber dem Betrieb ohne zeitweises periodisches Entladen verringert werden kann. Dies kommt in der Wirkung einer Kapazitätserhöhung des Betriebskondensators 3 gleich, was insbesondere am Beginn des Anlaufens von Vorteil ist.

## Patentansprüche

1. Verfahren zum Steuern des Anlaufens eines einphasigen Asynchronmotors mit einer Hauptphasenwicklung (1), einer Hilfsphasenwicklung (2) und einem zur Hilfsphasenwicklung (2) in Serie geschalteten Betriebskondensator (3), bei dem die Impedanz im Erregerkreis der Hauptphasenwicklung (1) während des Anlaufens des Motors erhöht wird, dadurch gekennzeichnet, daß der Betriebskondensator (3) periodisch kurzgeschlossen wird.

2. Verfahren nach Anspruch 1, dadurch gekennzeichnet, daß Teilwicklungen (1',1") der Hauptphasenwicklung (1) während des Anlaufens in Serie und beim Betrieb des Motors parallel geschaltet werden.

3. Verfahren nach Anspruch 1, dadurch gekennzeichnet, daß wenigstens eine (1") von parallel geschalteten Teilwicklungen (1',1") der Hauptphasenwicklung (1) während des Anlaufens des Motors weggeschaltet wird.

4. Verfahren nach einem der Ansprüche 1 bis 3, dadurch gekennzeichnet, daß eine Steuerspannung (10) in Sägezahnform mit doppelter Netzfrequenz erzeugt wird, und daß diese Steuerspannung (10) mit einer vorgegebenen Vergleichsspannung (11) in einer Vergleichsschaltung verglichen wird, die das Kurzschließen des Betriebskondensators (3) steuert.

5. Verfahren nach Anspruch 4, dadurch gekennzeichnet, daß die Drehzahl oder ein anderer, vergleichbarer Betriebsparameter des Motors gemessen wird, und daß die Vergleichsspannung (11) in Abhängigkeit von der Drehzahl oder des anderen Betriebsparameters des Motors angepasst wird.

6. Schaltung zum Steuern des Anlaufens eines einphasigen Asynchronmotors mit einer Hauptphasenwicklung (1), einer zur Hauptphasenwicklung (1) parallel geschalteten Hilfsphasenwicklung (2) und einem zur Hilfsphasenwicklung (2) in Serie geschalteten Betriebskondensator (3), und mit einer Einrichtung, um die Impedanz im Erregerkreis der Hauptphasenwicklung (2) während des Anlaufens des Motors zu erhöhen, gekennzeichnet durch einen Schalter (7, 8), mit dem der Betriebskondensator (3) periodisch kurzgeschlossen werden kann.

7. Schaltung nach Anspruch 6, dadurch gekennzeichnet, daß die Hauptphasenwicklung (1) aus wenigstens zwei Teilwicklungen (1', 1") besteht, die während des Anlaufens in Serie geschaltet und die beim Betrieb des Motors parallel geschaltet sind.

8. Schaltung nach Anspruch 6, dadurch gekennzeichnet, daß die Hauptphasenwicklung (1) aus wenigstens zwei zueinander parallel geschalteten Teilwicklungen (1', 1") besteht, und daß beim Anlaufen wenigstens eine Teilwicklung (1") weggeschaltet ist.

9. Schaltung nach einem der Ansprüche 6 bis 8, dadurch gekennzeichnet, daß der dem Betriebskondensator (3) zugeordnete Schalter ein Triac (8) ist.

10. Schaltung nach einem der Ansprüche 6 bis 8, dadurch gekennzeichnet, daß der dem Betriebskondensator (3) zugeordnete Schalter (7) zwei antiparallel geschaltete Thyristoren (9) oder GTO's aufweist.

11. Schaltung nach einem der Ansprüche 6 bis 10, dadurch gekennzeichnet, daß ein Generator vorgesehen ist, der eine Steuerspannung (10) in Sägezahnform mit doppelter Netzfrequenz erzeugt, und daß eine Vergleichsschaltung zum Vergleichen dieser Spannung mit einer vorgegebenen Vergleichsspannung (11) vorgesehen ist, die den dem Betriebskondensator (3) zugeordneten Schalter (7, 8) steuert.

12. Schaltung nach Anspruch 11, dadurch gekennzeichnet, daß eine Einrichtung zum Messen der Drehzahl oder eines anderen, vergleichbaren Betriebsparameters des Motors vorgesehen ist, um die Vergleichsspannung (11) in Abhängigkeit von der Drehzahl oder des anderen Betriebsparameters des Motors zu ändern.
